(19) Europäisches Patentamt
European Patent Office
Office européen des brevets

(11) **EP 2 145 372 B1**

(12) **EUROPÄISCHE PATENTSCHRIFT**

(45) Veröffentlichungstag und Bekanntmachung des Hinweises auf die Patenterteilung:
**25.01.2012 Patentblatt 2012/04**

(21) Anmeldenummer: **07722382.4**

(22) Anmeldetag: **07.05.2007**

(51) Int Cl.:
**H02J 3/18** (2006.01)

(86) Internationale Anmeldenummer:
**PCT/DE2007/000828**

(87) Internationale Veröffentlichungsnummer:
**WO 2008/134997 (13.11.2008 Gazette 2008/46)**

(54) **VERFAHREN UND VORRICHTUNG ZUR BESTIMMUNG DES LASTFLUSSES IN EINEM ELEKTRISCHEN VERSORGUNGSNETZ**

METHOD AND DEVICE FOR DETERMINING LOAD FLOW IN AN ELECTRICAL SUPPLY GRID

PROCÉDÉ ET DISPOSITIF POUR DÉTERMINER LE FLUX DE CHARGES DANS UN RÉSEAU D'ALIMENTATION ÉLECTRIQUE

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**20.01.2010 Patentblatt 2010/03**

(73) Patentinhaber: **Siemens Aktiengesellschaft 80333 München (DE)**

(72) Erfinder: **DZAFIC, Izudin 90461 Nürnberg (DE)**

(56) Entgegenhaltungen:
**CA-A1- 2 479 603       US-A- 4 868 410
US-A1- 2004 243 377**

**Beschreibung**

Die Erfindung betrifft ein Verfahren zur Bestimmung des Lastflusses in einem symmetrischen elektrischen Versorgungsnetz, insbesondere einem symmetrischen elektrischen Verteilnetz, mit unsymmetrischen Lasten.

Für Lastflussuntersuchungen wird ein Energieversorgungsnetz mittels einer Anzahl von Knoten und den Leitungen als Verbindungen der Knoten simuliert. Die Quellen und Senken sind dabei von Generatoren und Lasten in bestimmten Netzknoten abgebildet. Das zu untersuchende Energieversorgungsnetz weist zu beachtende Quer- und Längsimpedanzen und Kapazitäten auf, wobei in jedem Knoten des Energieversorgungsnetzes der Netzzustand durch die komplexe Spannung $\underline{U}=U*e^{jv}$ bzw. durch die komplexe Leistung $\underline{S}=P+j*Q$ abbildbar ist. Von diesen vier realen Größen (U, u, P, Q) werden zwei Größen vorgegeben und damit die beiden verbleibenden Größen im Rahmen der Lastflussberechnung berechnet.

Die Abbildung dieser Gleichung für alle Knotenpunkte erfolgt in einer Systemadmittanz bzw. Leitwertmatrix $\underline{Y}$, die als ganzes durch verschiedene algebraische Verfahren, z.B. Iterationsverfahren zur Variation des Stromes, gelöst werden können.

Problematisch ist hierbei, dass herkömmlicherweise die Lastflussberechnung für die gesamte Leitwertmatrix $\underline{Y}$ erfolgt, was zum einen sehr rechenintensiv ist und zum anderen eine parallele Verarbeitung der Lösungsiterationen verhindert.

Aus der kanadischen Patentanmeldung CA 2 479 603 A1 ist zudem ein Verfahren zur Lastflussberechnung in elektrischen Versorgungsnetzen bekannt, bei dem eine Zerlegung des Versorgungsnetzes in mehrere Teilnetze erfolgt. Eine Lastflussberechnung wird dann unter Nutzung von sequentiellen und/oder parallelen Berechnungsmethoden durchgeführt.

Aufgabe der vorliegenden Erfindung ist es daher, eine Lastflussberechnung bereitzustellen, die eine schnelle und parallele Verarbeitung der Rechenoperation zur Berechnung des Lastflusses in algebraischer Form erlaubt.

Gelöst wird die Aufgabe durch die Merkmale des Verfahrens-Anspruchs 1 und des Vorrichtungs-Anspruchs 7. . Erfindungsgemäß ist vorgesehen, dass eine komplexe Leitwertmatrix $\underline{Y}$ als Zuordnung zwischen einem Vektor der unabhängigen Stromquellen $I_{abc}$ und einem Vektor der Knotenspannung $V_{abc}$ als lineares Gleichungssystem gebildet wird. Die Elemente der Hauptdiagonale der Leitwertmatrix Y werden als Eigenadmittanzen bezeichnet und setzen sich aus der Summe aller Zweigadmittanzen zum benachbarten Knoten zusammen, bezogen auf eine gemeinsame Spannungsebene. Die Elemente der Nebendiagonale der Leitwertmatrix Y werden als Koppeladmittanzen bezeichnet und bilden die negative Zweigadmittanz zu benachbarten Knoten - bezogen auf eine gemeinsame Spannungsebenen - ab. Für den Fall, dass keine direkte Verbindung zwischen zwei Knoten existiert, ist das entsprechende Matrixelement Null.

Nachfolgend wird die Leitwertmatrix $\underline{Y}$ in drei symmetrische Komponentenmatrizen $\underline{Y0}$, $\underline{Y1}$ und $\underline{Y2}$ konvertiert. Mittels der Methode der "symmetrischen Komponenten" wird ein unsymmetrisches Drehstromsystem in drei symmetrische Komponenten, dem Nullsystem (0-Komponente), dem Mitsystem (1-Komponente) und dem Gegensystem (2-Komponente), unterteilt. Dieses Verfahren wird bisher ausschließlich zur Detektion von 1-/2-poligen Kurzschlüssen verwendet.

Die einzelnen symmetrischen Komponentenmatrizen $\underline{Y0}$, $\underline{Y1}$ und $\underline{Y2}$ werden zur einfacheren algebraischen Lösung umgestellt und transformiert, so dass ein einfach zu lösendes lineares Gleichungssystem entsteht. Nachfolgend wird ein Spannungsvektor $V_{012}$ der symmetrischen Raumzeigerkomponenten aufgespalten in eine (0), (1) und eine (2) Komponente in Bezug auf die symmetrischen Komponentenmatrizen Y0, Y1 und Y2 initialisiert. Dies ist notwendig, da die nichtlineare Lösung nur mittels eines iterativen Verfahrens gefunden werden kann. Im Rahme dieser so genannten "Flat-Start"-Bedingung werden beispielsweise den Spannungen bestimmte Startwerte zugeordnet, wobei beim Start der Lösung keine Kopplung zwischen den Spannungswerten angenommen wird.

Mit Hilfe des Spannungsvektor $V_{012}$ der symmetrischen Raumzeigerkomponenten wird dann mittels der bekannten Konvertierungsmatrix $\underline{A}$ der Spannungsvektor $V_{abc}$ gebildet.

Die bekannte Konvertierungsmatrix $\underline{A}$ hat die folgende Form:

$$A = \begin{bmatrix} 1 & 1 & 1 \\ 1 & a^2 & a \\ 1 & a & a^2 \end{bmatrix}$$

$$a = e^{j120}$$

und ordnet den phasenverschobenen symmetrischen Raumzeigerkomponenten phasengleiche symmetrischen Raumzeigerkomponenten zu.

Anschließend wird der Stromvektor $I_{abc}$ der symmetrischen Raumzeigerkomponenten aus der konjugiert komplexen Leistungsmatrix $\underline{S}_{abc}$ dividiert durch den Spannungsvektor $V_{abc}$ der symmetrischen Raumzeigerkomponenten berechnet ($I_{abc}=$conj $[\underline{S}_{abc}/V_{abc}]$).

Das Null-, Mit- und Gegensystem des Stromvektors $I_{abc}$ wird dann aus der inversen Matrix $A^{-1}$ und dem Stromvektor $I_{abc}$ der symmetrischen Raumzeigerkomponenten gebildet und die so gebildeten einzelnen

Gleichungssysteme $V_i Y_i = I_i$ unabhängig voneinander gelöst. Dieses bisher teilweise nur zur 1 bzw. 2-poligen Kurzschlussprüfung genutzte Verfahren wird gemäß der vorliegenden Erfindung auf Lastflussberechnungen von Energieversorgungsnetzen erweitert.

Es wird als Vorteil angesehen, dass über alle Einspeisungsknotenpunkte in das Energieversorgungsnetz die Kirchhoffschen Regeln angewendet werden und damit die Plausibilität der gefundenen Lösung überprüft werden kann.

Vorteilhafterweise erfolgt die Umstellung der Leitwertmatrix $Y$ zum Lösen des Gleichungssystems mittels einer Dreiecksverlegung (LR-Zerlegung) der symmetrischen Komponentenmatrizen $Y0$, $Y1$ und $Y2$ oder des Gaußschen Eliminationsverfahrens oder mittels Bildung einer inversen Leitwertmatrix $Y^{-1}$.

In einer vorteilhaften Ausgestaltung des Verfahrens ist vorgesehen, dass die Berechnung der einzelnen Spannungs- $V_{abc}$ und/oder Stromvektoren $I_{abc}$ der Raumzeigerkomponenten in unterschiedlichen Prozessoren innerhalb eines Rechensystems durchgeführt wird.

Die Matrixmultiplikationen werden vorteilhafterweise optimiert für einen Rechner mittels einer BLAS (Basic Linear Algebra Subprograms)-Routine durchgeführt, da BLAS-Routinen speziell für Vektoroperatoren optimiert sind.

Vorteilhafterweise ist das Energieversorgungsnetz ein elektrisches Hochspannungsnetz. Die Anwendung des erfindungsgemäßen Verfahrens ist jedoch auch für andere Energieversorgungsnetze, beispielsweise Gas-Versorgungsnetze einsetzbar. Zur Lösung der Gleichungssysteme für andere Gas- oder Wasserversorgungsnetze müssen die Äquivalente zu den elektrischen Variabeln eingesetzt werden.

Unter den Begriffen Computerprogrammmittel ist im vorliegenden Zusammenhang jeder Ausdruck in einer beliebigen Computersprache, Code oder Notation eines Satzes von Anweisungen zu verstehen, welche ein Computersystem zur Datenverarbeitung und so zur Ausführung einer bestimmten Funktion befähigen. Das Computerprogrammmittel, das Computerprogramm bzw. die Computeranwendung ist entweder direkt oder nach einer Umwandlung in eine andere Sprache, Code, Notation oder durch die Darstellung in einer anderen materiellen Form auf dem Computersystem lauffähig.

Weitere vorteilhafte Ausgestaltungen finden sich in den Unteransprüchen.

Im Falle einer symmetrischen Netzkonfiguration - alle Leitungen sind symmetrisch und alle Transformatoren sind Dreiphasentransformatoren - liegen drei unabhängige Gleichungssysteme mit jeweils sieben von Null abweichenden Matrixelementen vor. Aufgrund der Möglichkeit einer parallelen Verarbeitung reduziert sich die Berechnungszeit der Gleichungssysteme um einen Faktor neun.

**Patentansprüche**

1. Verfahren zur Bestimmung des Lastflusses in einem Energieversorgungsnetz mit folgenden Schritten:

   - Bildung einer komplexen Leitwertmatrix $Y$ als Zuordnung zwischen einem Vektor der unabhängigen Stromquellen $I_{abc}$ und einem Vektor der Knotenspannung $V_{abc}$ als lineares Gleichungssystem,
   - Konvertierung der Leitwertmatrix $Y$ in drei symmetrische Komponentenmatrizen $Y0$, $Y1$ und $Y2$,
   - Umstellung der symmetrischen Komponentenmatrizen $Y0$, $Y1$ und $Y2$ zur Lösung der symmetrischen Komponentenmatrizen $Y0$, $Y1$ und $Y2$,
   - Initialisierung eines Spannungsvektors $V_{012}$ der symmetrischen Raumzeigerkomponenten aufgespalten in eine (0), (1) und eine (2) Komponente in Bezug auf die symmetrischen Komponentenmatrizen $Y0$, $Y1$ und $Y2$,
   - Berechnung eines Spannungsvektors $V_{abc}$ der symmetrischen Raumzeigerkomponenten mittels der Konvertierungsmatrix $A$ und Transformation mittels des Raumzeigervektors $V_{012}$,
   - Berechnung des Stromvektors $I_{abc}$ der symmetrischen Raumzeigerkomponenten aus der konjugiert komplexen Leistungsmatrix $S_{abc}$ dividiert durch den Spannungsvektor $V_{abc}$ der symmetrischen Raumzeigerkomponenten,
   - Berechnung der (0), (1) und (2) Komponenten des Spannungsvektors $I_{abc}$ aus der inversen Matrix $A^{-1}$ und dem Stromvektor $I_{abc}$ der symmetrischen Raumzeigerkomponenten,
   - Lösung der einzelnen Gleichungssysteme $V_i Y_i = I_i$ unabhängig voneinander durch Vorwärtselimination und Rückwärtssubstitution.

2. Verfahren nach Anspruch 1,
**dadurch gekennzeichnet, dass** die Kirchhoffsche Regel auf alle Einspeisungsknotenpunkte angewendet wird.

3. Verfahren nach einem der Ansprüche 1 oder 2, **dadurch gekennzeichnet, dass** die Umstellung der Leitwertmatrix $Y$ zum Lösen des Gleichungssystems mittels einer Dreiecksverlegung (LR-Zerlegung) oder des Gaußschen Eliminationsverfahrens oder mittels Bildung einer inversen Leitwertmatrix $Y^{-1}$ gelöst wird.

4. Verfahren nach einem der Ansprüche 1 bis 3, **dadurch gekennzeichnet, dass** die Berechnung der einzelnen Spannungs- $V_{abc}$ und/oder Stromvektoren $I_{abc}$ der Raumzeigerkomponenten in unterschiedlichen Prozessoren innerhalb eines Rechensystems durchgeführt wird.

**5.** Verfahren nach einem der Ansprüche 1 bis 4, **dadurch gekennzeichnet, dass** die Matrixmultiplikationen optimiert für einen Rechner mittels einer BLAS-Routine durchgeführt werden.

**6.** Verfahren nach einem der Ansprüche 1 bis 5, **dadurch gekennzeichnet , dass** das Energieversorgungsnetz ein elektrisches Hochspannungsnetz ist.

**7.** Vorrichtung zur Bestimmung des Lastflusses in einem Energieversorgungsnetz, die folgende mittel aufweist:

Mittel zur Bildung einer komplexen Leitwertmatrix Y als Zuordnung zwischen einem Vektor der unabhängigen Stromquellen $I_{abc}$ und einem Vektor der Knotenspannung $V_{abc}$ als lineares Gleichungssystem,
Mittel zur Konvertierung der Leitwertmatrix Y in drei symmetrische Komponentenmatrizen $\underline{Y0}$, $\underline{Y1}$ und $\underline{Y2}$,
Mittel zur Umstellung der symmetrischen Komponentenmatrizen $\underline{Y0}$, $\underline{Y1}$ $\underline{Y2}$ zur Lösung der symmetrischen Komponentenmatrizen $\underline{Y0}$, $\underline{Y1}$ und $\underline{Y2}$,
Mittel zur Initialisierung eines Spannungsvektors $V_{012}$ der symmetrischen Raumzeigerkomponenten aufgespaltet in eine (0), (1) und eine (2) Komponente in Bezug auf die symmetrischen Komponentenmatrizen $\underline{Y0}$, $\underline{Y1}$ und $\underline{Y2}$,
Mittel zur Berechnung eines Spannungsvektors $V_{abc}$ der symmetrischen Raumzeigerkomponenten mittels der Konvertierungsmatrix A und Transformation mittels des Raumzeigervektors $V_{012}$,
Mittel zur Berechnung des Stromvektors $I_{abc}$ der symmetrischen Raumzeigerkomponenten aus der konjugiert komplexen Leistungsmatrix $\underline{S_{abc}}$ dividiert durch den Spannungsvektor $V_{abc}$ der symmetrischen Raumzeigerkomponenten,
Mittel zur Berechnung der (0), (1) und (1) und (2) Komponenten des Spannungsvektors $I_{abc}$ aus der inversen Matrix $A^{-1}$ und dem Stromvektor $I_{abc}$ der symmetrischen Raumzeigerkomponenten,
Mittel zur Lösung der einzelnen Gleichungssysteme $V_i\underline{Y_i}=I_i$ unabhängig voneinander durch Vorwärtselimination und Rückwärtssubstitution.

**8.** Computerprogrammprodukt, das in einem computerlesbaren Medium gespeichert ist und computerlesbare Mittel umfasst, mittels derer ein Computer veranlasst wird, ein Verfahren nach einem der vorhergehenden Ansprüche 1 bis 6 durchzuführen, wenn das Programm in dem Computer abläuft.

**Claims**

**1.** Method for determining load flow in a power supply system, having the following steps:

- forming a complex conductance matrix $\underline{Y}$ as an assignment between a vector of the independent current sources $I_{abc}$ and a vector of the node voltage $V_{abc}$ as a system of linear equations,
- converting the conductance matrix $\underline{Y}$ into three symmetrical component matrices $\underline{Y0}$, $\underline{Y1}$ and $\underline{Y2}$,
- converting the symmetrical component matrices $\underline{Y0}$, $\underline{Y1}$ and $\underline{Y2}$ in order to solve the symmetrical component matrices $\underline{Y0}$, $\underline{Y1}$ and $\underline{Y2}$,
- initializing a voltage vector $V_{012}$ of the symmetrical space vector components in a fashion split into a (0), (1) and a (2) component with reference to the symmetrical component matrices $\underline{Y0}$, $\underline{Y1}$ and $\underline{Y2}$,
- calculating a voltage vector $V_{abc}$ of the symmetrical space vector components by means of the conversion matrix A and transforming them by means of the space vector $V_{012}$,
- calculating the current vector $I_{abc}$ of the symmetrical space vector components from the complex conjugate power matrix $\underline{S_{abc}}$ divided by the voltage vector $V_{abc}$ of the symmetrical space vector components,
- calculating the (0), (1) and (2) components of the voltage vector $I_{abc}$ of the inverse matrix $\underline{A^{-1}}$ and the current vector $I_{abc}$ of the symmetrical space vector components,
- solving the individual systems of equations $V_i\underline{Y_i}$ = $I_i$ independently of one another by forward elimination and backward substitution.

**2.** Method according to Claim 1,
**characterized in that** Kirchhoff's law is applied to all feeder nodes.

**3.** Method according to either of Claims 1 and 2, **characterized in that**
the conversion of the conductance matrix Y in order to solve the system of equations is solved by means of a triangular decomposition (LR decomposition) or of the Gaussian elimination method or by means of forming an inverse conductance matrix $Y^{-1}$.

**4.** Method according to one of Claims 1 to 3, **characterized in that** the calculation of the individual voltage $V_{abc}$ and/or current vectors $I_{abc}$ of the space vector components is carried out in different processors in a computer system.

**5.** Method according to one of Claims 1 to 4,
**characterized in that**

the matrix multiplications are carried out in optimized fashion for a computer by means of a BLAS routine.

6. Method according to one of Claims 1 to 5,
   **characterized in that**
   the power supply system is an electrical high voltage system.

7. Device for determining load flow in a power supply system, which device has the following means:

   - means for forming a complex conductance matrix $\underline{Y}$ as an assignment between a vector of the independent current sources $I_{abc}$ and a vector of the node voltage $V_{abc}$ as a system of linear equations,
   - means for converting the conductance matrix $\underline{Y}$ into three symmetrical component matrices $\underline{Y0}$, $\underline{Y1}$ and $\underline{Y2}$,
   - means for converting the symmetrical component matrices $\underline{Y0}$, $\underline{Y1}$ and $\underline{Y2}$ in order to solve the symmetrical component matrices $\underline{Y0}$, $\underline{Y1}$ and $\underline{Y2}$,
   - means for initializing a voltage vector $V_{012}$ of the symmetrical space vector components in a fashion split into a (0), (1) and a (2) component with reference to the symmetrical component matrices $\underline{Y0}$, $\underline{Y1}$ and $\underline{Y2}$,
   - means for calculating a voltage vector $V_{abc}$ of the symmetrical space vector components by means of the conversion matrix A and transforming by means of the space vector $V_{012}$,
   - means for calculating the current vector $I_{abc}$ of the symmetrical space vector components from the complex conjugate power matrix $\underline{S_{abc}}$ divided by the voltage vector $V_{abc}$ of the symmetrical space vector components,
   - means for calculating the (0), (1) and (2) components of the voltage vector $I_{abc}$ of the inverse matrix $A^{-1}$ and the current vector $I_{abc}$ of the symmetrical space vector components,
   - means for solving the individual systems of equations $V_i\underline{Y_i}=I_i$ independently of one another by forward elimination and backward substitution.

8. Computer program product that is stored in a computer-readable medium and comprises computer-readable means by means of which a computer is prompted to carry out a method according to one of the preceding Claims 1 to 6 when the program is running on the computer.

**Revendications**

1. Procédé de détermination du flux de charge dans un réseau d'alimentation électrique comprenant les stades suivants :

   - on forme une matrice $\underline{Y}$ de susceptance complexe comme correspondance entre un vecteur des sources $I_{abc}$ de courant indépendantes et un vecteur de la tension $V_{abc}$ au noeud sous la forme d'un système d'équations linéaires,
   - on transforme la matrice $\underline{Y}$ de susceptance en trois matrices $\underline{Y0}$, $\underline{Y1}$ et $\underline{Y2}$ composantes symétriques,
   - on inverse les matrices $\underline{Y0}$, $Y1$ et $\underline{Y2}$ composantes symétriques pour résoudre les matrices $\underline{Y0}$, $\underline{Y1}$ et $\underline{Y2}$ composantes symétriques,
   - on initialise un vecteur $V_{012}$ de tension des composantes symétriques de vecteur d'espace décomposé en une composante ( 0 ) , ( 1 ) et ( 2 ) par rapport aux matrices $\underline{Y0}$, $\underline{Y1}$ et $\underline{Y2}$ composantes symétriques,
   - on calcule un vecteur $V_{abc}$ de tension des composantes symétriques de vecteur d'espace au moyen de la matrice A de conversion et de la transformation au moyen du vecteur $V_{012}$ d'espace,
   - on calcule le vecteur $I_{abc}$ de courant des composantes symétriques de vecteur d'espace à partir de la matrice $\underline{S_{abc}}$ de puissance complexe conjuguée divisée par le vecteur $V_{abc}$ de tension des composantes symétriques de vecteur d'espace,
   - on calcule les composantes ( 0 ), ( 1 ) et ( 2 ) du vecteur $I_{abc}$ de tension à partir de la matrice $A^{-1}$ inverse et du vecteur $I_{abc}$ de courant des composantes symétriques de vecteur d'espace,
   - on résout les systèmes $V_i\underline{Y_i}=I_i$ individuels d'équations indépendamment les uns des autres par élimination vers l'avant et substitution vers l'arrière.

2. Procédé suivant la revendication 1,
   **caractérisé en ce que** l'on applique la loi de Kirchhoff sur tous les points de noeud d'alimentation.

3. Procédé suivant la revendication 1 ou 2,
   caractérisé en ce l'on effectue l'inversion de la matrice Y de susceptance pour résoudre le système d'équations au moyen d'un déplacement triangulaire ( décomposition LR ) ou du procédé d'élimination Gaussien ou au moyen de la formation d'une matrice $\underline{Y^{-1}}$ inverse de valeur de susceptance.

4. Procédé suivant l'une des revendications 1 à 3,
   **caractérisé en ce que** l'on effectue le calcul des vecteurs $V_{abc}$ de tension et/ou $I_{abc}$ de courant individuels des composantes de vecteur d'espace dans des processeurs différents au sein d'un système informatique.

5. Procédé suivant l'une des revendications 1 à 4,

**caractérisé en ce que** l'on effectue les multiplications de matrices de façon optimisée pour un ordinateur au moyen d'un programme BLAS.

6. Procédé suivant l'une des revendications 1 à 3, **caractérisé en ce que** le réseau d'alimentation électrique est un réseau électrique de haute tension.

7. Dispositif de détermination du flux de charge dans un réseau d'alimentation électrique qui comporte les moyens suivants :

   - des moyens de formation d'une matrice Y complexe de susceptance comme correspondance entre un vecteur des sources $I_{abc}$ de courant indépendantes et un vecteur de la tension $V_{abc}$ de noeud sous la forme d'un système d'équations linéaires,
   - des moyens de transformation de la matrice Y de susceptance en trois matrices $\underline{Y0}$, $\underline{Y1}$, $\underline{Y2}$ composantes symétriques,
   - des moyens d'inversion des matrices $\underline{Y0, Y1}$ $\underline{Y2}$ composantes symétriques pour la résolution des matrices $\underline{Y0, Y1}$ $\underline{Y2}$ composantes symétriques,
   - des moyens d'initialisation d'un vecteur $V_{012}$ de tension des composantes symétriques de vecteur d'espace décomposé en une composante ( 0 ), ( 1 ) et ( 2 ) par rapport aux matrices $\underline{Y0, Y1}$ et $\underline{Y2}$ composantes symétriques,
   - des moyens de calcul d'un vecteur $V_{abc}$ de tension des composantes symétriques de vecteur d'espace au moyen de la matrice A de conversion et de la transformation au moyen du vecteur $V_{012}$ d'espace,
   - des moyens de calcul du vecteur $I_{abc}$ de courant des composantes symétriques de vecteur d'espace à partir de la matrice $\underline{S_{abc}}$ de puissance conjuguée complexe divisée par le vecteur $V_{abc}$ de tension des composantes symétriques de vecteur d'espace,
   - des moyens de calcul des composantes ( 0 ), ( 1 ) et ( 2 ) du vecteur $I_{abc}$ de tension à partir de la matrice $A^{-1}$ inverse et du vecteur $I_{abc}$ de courant des composantes symétriques de vecteur d'espace,
   - des moyens de résolution des systèmes ViYi=Ii individuels d'équations indépendamment les uns des autres par élimination vers l'avant et substitution vers l'arrière.

8. Produit de programme informatique, qui est mémorisé dans un support pouvant être lu par un ordinateur et qui comprend des moyens pouvant être lus par un ordinateur et au moyen duquel on fait en sorte qu'un ordinateur effectue un procédé suivant l'une des revendications précédentes 1 à 6, lorsque le programme passe dans l'ordinateur.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CA 2479603 A1